# EUROPÄISCHE PATENTSCHRIFT

(11) **EP 2 459 811 B1**
(45) Veröffentlichungstag und Bekanntmachung des Hinweises auf die Patenterteilung: **07.09.2016**
(21) Anmeldenummer: 10747142.7
(22) Anmeldetag: 14.07.2010
(51) Int. Cl.: E04H 1/12, E04B 1/344, E04B 1/343, B60P 3/34

(54) **Klappbare Wohnbox**
Foldable living box
Boîte d'habitation pliante

(30) Priorität: 28.07.2009 AT 11792009
(43) Veröffentlichungstag der Anmeldung: 06.06.2012
(73) Patentinhaber: Geiger, Bernhard, 6020 Innsbruck (AT); Kathan, Armin, 6020 Innsbruck (AT)
(72) Erfinder: Geiger, Bernhard, 6020 Innsbruck (AT); Kathan, Armin, 6020 Innsbruck (AT)
(74) Vertreter: Torggler & Hofinger Patentanwälte
(86) Internationale Anmeldenummer: PCT/AT2010/000260
(87) Internationale Veröffentlichungsnummer: WO 2011/011802

(56) Entgegenhaltungen:
- EP-A1- 0 280 265
- WO-A1-2004/065167
- DE-A1- 3 618 612
- FR-A1- 2 530 778
- US-A- 4 123 869
- US-A1- 2006 185 709

## Beschreibung

Die Erfindung betrifft eine klappbare Wohnbox, die relativ zueinander schwenkbare Teile aufweist, wobei durch das Verschwenken der Teile ein nutzbarer, insbesondere bewohnbarer, Innenraum entsteht.

Wohnmobile und Wohnwagen müssen große, leere Raumvolumen transportieren, welche sperrig und schlecht rangierbar sind, dazu werden eventuelle Raumvergrößerungen mittels Textil- oder Schubladenkonstruktionen dazugeschaltet. Fertigteilhäuser werden zumeist in Elementbauweise errichtet, und sind somit nur aufwändig mitsamt der Inneneinrichtung transportfähig zu machen.

Die EP 0 280 265 A1 zeigt eine vorgefertigte Wohneinheit, welche aus drei schachtelartigen Elementen und einem Dachelement besteht. Weitere kloppbere Wohnboxen sind aus FR2530778, US4123869, US2006/0185709, WO2004/065167 und DE 3618612 bekannt.
Die DE 10 2005 035 175 A1 offenbart einen klappbaren Versorgungscontainer, der im ausgeklappten Zustand als Schutzunterkunft bzw. als Wohnraum genutzt werden kann. Die Seitenwände sind dabei derart ausgebildet, dass sie schrittweise zusammengeklappt werden können. Die Klappvorrichtungen sind dabei an unterschiedlichen Höhen an den Seitenwänden angebracht, wodurch beim Zusammenklappen die Seitenwandelemente aufeinander zu liegen kommen. Durch diese Vorgehensweise wird eine zusammengeklappte und geringere Außenabmessungen umfassende Wohnbox geschaffen, die einfach verfrachtet werden kann. Der Nachteil an diesem klappbaren Versorgungscontainer ist, dass durch die Verwendung von geteilten Seitenelementen eine vornehmlich instabile Konstruktion entsteht die aufwendig auf- bzw. zuklappbar ist.

Die Aufgabe der Erfindung ist es, die vorher beschriebenen Nachteile zu vermeiden und eine gegenüber dem Stand der Technik bessere klappbare Wohnbox anzugeben.

Dies wird bei einer erfindungsgemäßen klappbaren Wohnbox dadurch erreicht, dass die schwenkbaren Teile als Raummodule unterschiedlicher Größe ausgebildet sind welche starre und relativ zueinander feststehende oder feststellbare Seitenwände aufweisen und die Raummodule relativ zueinander und ineinander schwenkbar, insbesondere verschachtelbar, sind.

Die wenigstens vier Raummodule verfügen über wenigstens drei starre und relativ zueinander feststehende Seitenwände.

Durch die Ausführung der Wohnbox aus zueinander relativ verschwenkbaren Raummodulen wird eine hohe Steifigkeit der Wohnbox erreicht. Weiters ist gewährleistet, dass im zusammengeklappten Zustand die Wohnbox geringere Abmessungen aufweist, und somit leicht transportierbar ist. Des Weiteren macht es ein Aufbau aus Raummodulen möglich, das die Inneneinrichtung dauerhaft in den Raummodulen verbleiben kann und nicht erst nach dem Ausklappen in die Wohnbox eingebracht werden muss. Somit ist eine voll bestückte und nach dem Ausklappen sofort verwendbare Behausung geschaffen, da nicht erst die Inneneinrichtungen - wie zum Beispiel Tisch, Bett, Kühlschrank, Herd, etc. - in die Wohnbox eingebracht werden müssen, sondern diese bereits im zugeklappten Zustand in der Wohnbox vorhanden sind. Diese Inneneinrichtungen können auch in der Wohnbox verbleiben wenn die Wohnbox wieder zusammengeklappt wird.

Gestaltet man die klappbare Wohnbox möglichst klein, so ist sie von einer Person tragbar bzw. transportierbar und kann aufgeklappt als Kleinstunterkunft dienen, oder etwas größer ist sie vorzugsweise z.B. auf einer PKW-, LKW-, Schiff-, Floß-, Ladefläche bzw. Anhänger oder Helikopter transportierbar. Aufgeklappt verfügt diese Wohnbox über einen vorzugsweise großen Innenraum, welcher die Erfordernisse eines Kleinhauses erfüllt, wobei die einzelnen Raummodule mit starren Wänden und Inneneinrichtungen miteinander beweglich verbunden ineinander geklappt werden, so dass ein einfacher und schneller, auch automatischer, Auf- bzw. Abbau möglich ist.

Die klappbare Wohnbox, bestehend aus ineinanderklappbaren Raummodulen - vorzugsweise aus Leichtbauelementen hergestellt - kann z.B. auf PKW- Ladeflächen als Wohnmobilersatz, bzw. auf PKW-Anhänger als Wohnwagenersatz aufgesetzt werden, die auch als mobiles Klein-, Ferien-, Gartenhaus, Jagdhütte, Biwakschachtel, Notunterkunft bei Katastrophen, Koje auf Boote und Flössen, tragbar auch als Zeltersatz für Zivil- bzw. Militäreinheiten oder Camping Verwendung finden kann, wobei die einzelnen Raummodule und Inneneinrichtungen so beweglich ineinander geklappt werden können, dass ein einfacher und schneller, auch automatischer, mittels Hydraulik, Seilzug oder Ähnlichem, Auf- bzw. Abbau möglich ist, wobei die mobile Wohnbox zusätzlich mit eigenem ausklappbaren und höhenverstellbarem Fahrgestell mit Räder und Anhängervorrichtung ausgestattet sein kann und die zusammengeklappte Wohnbox vorzugsweise mobil, wasserdicht und schwimmfähig sein kann.

Bei größeren Abmessungen der zusammengeklappten Wohnbox entsteht aus der auseinander geklappten Wohnbox ein mehrgeschossiges Bauwerk für z.B. Wohnen, Arbeiten, Ausstellung, Messen oder als Bühne für Veranstaltungen etc., wobei mehrere dieser Bauwerke miteinander über die sich bildenden mittleren Öffnungen gekoppelt werden können.

Bei beschränkter Möglichkeit für Höhenentwicklung oder bei größerem Flächenbedarf wird die vertikale Klappebene der Raummodule gekippt und in eine horizontale Klappebene geklappt, wobei die sich bildenden Öffnungen in der Mitte somit auf Fußboden bzw. Deckenebene zu liegen kommen und so sich im Zentrum eine Art Lichthof bzw. Atrium bildet.

Das variable Volumen der Wohnbox richtet sich nach Breite/Tiefe/Höhe der zusammengeklappten Wohnbox und die Abmessungen der Wohnbox richten sich nach der gewünschten Transportmöglichkeit oder dem gewünschten aufgeklappten Innenraumvolumen.

Weitere vorteilhafte Ausführungsformen der Erfindung sind in den abhängigen Ansprüchen definiert:
Vorzugsweise kann vorgesehen sein, dass die Wohnbox wenigstens vier Raummodule aufweist, da dadurch ein in sich geschlossenes System entsteht, nachdem die vier Raummodule in ihren Endstellungen miteinander verbunden wurden.

Als besonders vorteilhaft hat sich dabei herausgestellt, wenn die Raummodule über wenigstens vier starre und relativ zueinander feststehende Seitenwände verfügen, da dadurch auf allen sechs Seiten der ausgeklappten Wohnbox feste und stabile Wände entstehen.

Vorzugsweise kann vorgesehen sein, dass die Raummodule durch abdichtende Bandscharniere, Beschläge und/oder Mechanismen miteinander beweglich verbunden sind, da dadurch gewährleistet ist, dass eine maximale Bewegungsfreiheit garantiert ist und des Weiteren keine Flüssigkeiten oder ähnliches durch die Scharniere eindringen kann.

Vorzugsweise kann vorgesehen sein, dass die Wohnbox einen, vorzugsweise wasserdichten, stabilen Raumverbund bildet, da somit gewährleistet wird, dass die Wohnbox eine hohe Eigensteifigkeit aufweist und somit die Bewohner der Wohnbox vor Umwelteinflüssen geschützt sind.

Als besonders vorteilhaft hat sich dabei herausgestellt, wenn die ausgeklappten Raummodule in ihrer Endposition befestigbar und insbesondere werkzeuglos verriegelbar sind, da dadurch ein einfaches Ausklappen und Aufstellen der Wohnbox gewährleistet ist.

Als besonders vorteilhaft hat es sich dabei herausgestellt, wenn ein erstes Raummodul als Aufstellbasis dient und beweglich mit einem zweiten und einem dritten Raummodul verbunden ist, da durch eine vorgegebene Aufstellbasis es auch möglich ist, die aufgeklappte Wohnbox mittels der in die Aufstellbasis integrierten Rollen zu bewegen.

Des Weiteren hat es sich als besonders vorteilhaft herausgestellt, wenn das dritte Raummodul beweglich mit dem ersten Raummodul und einem vierten Raummodul verbunden ist, da somit ein einfaches Auf- als auch Zuklappen ermöglicht wird.

Gemäß einer bevorzugten Ausführung kann vorgesehen sein, dass das dritte Raummodul beweglich mit einem fünften Raummodul verbunden ist, da dadurch das fünfte Raummodul für eine erhöhte Festigkeit des dritten Raummoduls sorgen kann und den sich ergebenden Niveausprung ausgleicht.

Als besonders vorteilhaft hat es sich dabei herausgestellt, wenn die Summe der durch die Raummodule aufgespannten Rauminhalte kleiner ist als der Rauminhalt der ausgeklappten Wohnbox, da dadurch eine Maximierung des verwendbaren Innenraumes erreicht wird.

Als besonders vorteilhaft hat es sich dabei gezeigt, wenn eines der Raummodule oder die aufgeklappte Wohnbox eine Öffnung aufweist, da dadurch Tageslicht in die Wohnbox eindringen kann.

Als besonders vorteilhaft hat es sich dabei herausgestellt, wenn die Öffnung mit einem, vorzugsweise lichtdurchlässigen, vorzugsweise aus einem angrenzenden Wandelement herausklappbaren, Flächenelement bedeckbar ist, da dadurch ein einfaches Anbringen einer lichtdurchlässigen Klappe gewährleistet wird.

Als besonders vorteilhaft hat es sich dabei herausgestellt, wenn die Öffnung als Fenster oder als Zugang mit einer Tür ausgebildet ist, da dadurch sowohl Licht als auch Personen einfach in die Wohnbox gelangen können und es aber trotzdem weiterhin gewährleistet ist, dass die Wohnbox wetterfest ist.

Als besonders vorteilhaft hat es sich dabei herausgestellt, wenn die Wohnbox mobil und/oder transportabel ausgebildet ist, da sie durch die Transportfähigkeit einfach und ebenso in Massen von einem Ort zum anderen transportiert werden kann. So ist es möglich, dass die zusammengeklappte Wohnbox auf einem PKW oder LKW, auf Schiffen, Flugzeugen und Helikoptern und ähnlichem verfrachtet werden kann und somit in kurzer Zeit an jeden beliebigen Ort gebracht werden kann. Eine mobile Ausführung der Wohnbox birgt den Vorteil, dass die Wohnbox nicht zum Aufstellungsort geliefert werden muss, da sie durch ihre Mobilität an ihrem Aufstellungsort verweilen kann, der z.B. die Ladefläche eines PKWs als Wohnmobilersatz ist bzw. eines PKW-Anhängers als Wohnwagenersatz ist oder ebenso auf LKW-Ladeflächen als mehrstöckiges klappbares Haus Verwendung finden kann.

Als besonders vorteilhaft hat es sich dabei herausgestellt, wenn die Wohnbox ein von der Umgebung unabhängiges, sich selbst versorgendes System darstellt, da dadurch gewährleistet wird, dass sie von keiner Wasser- oder Stromversorgung abhängig ist.

Als vorteilhaft hat es sich dabei herausgestellt, wenn das Auf- und Zuklappen der Raummodule durch mechanische Vorrichtungen, vorzugsweise Seil- bzw. Kettenzügen und Umlenkrollen, erfolgt, da dadurch eine schnelle und komfortable Möglichkeit geschaffen wird, die Wohnbox aufzurichten.

Als besonders vorteilhaft hat es sich dabei herausgestellt, wenn das Auf- und Zuklappen der Raummodule automatisiert durch eine Antriebsvorrichtung erfolgt, da somit eine äußerst komfortable und schnelle Möglichkeit gegeben ist, die Wohnbox aufzurichten.

Des Weiteren hat es sich als vorteilhaft herausgestellt, wenn die Wände der Raummodule aus Sandwichleichtbauelementen bestehen, welche innen mit integrierten Klappelementen ausgestattet sind, da dadurch ein geringes Gewicht der Wohnbox erreicht wird und des Weiteren mit Hilfe der integrierten Klappelemente zusätzlicher Stauraum geschaffen wird.

Des Weiteren hat es sich als vorteilhaft herausgestellt, wenn die Wohnbox über eine Vorrichtung verfügt, welche die Wohnbox während der Benutzung als auch während dem Auf- und Abbau vor Witterungseinflüssen schützt, da somit gewährleistet wird, dass während des Errichtens oder des Zusammenklappens keine negativen Umwelteinflüsse auf die offenen Raummodule wirken können.

Des Weiteren hat es sich als äußerst vorteilhaft herausgestellt, wenn die Vorrichtung zur Wasser- und Energiegewinnung genützt werden kann, da somit eine umweltfreundliche Methode gefunden wird, ein autarkes System zu schaffen.

Als besonders vorteilhaft hat es sich dabei herausgestellt, wenn das variable Volumen der Wohnbox sich nach Breite/Tiefe/Höhe der zusammengeklappten Wohnbox richtet und die Abmessungen der Wohnbox sich nach den gewünschten Transportmöglichkeiten oder dem gewünschten aufgeklappten Innenraumvolumen richten, da somit sich je nach Anforderung die Abmessungen der zusammengeklappten Wohnbox auf die Abmessungen der aufgeklappten Wohnbox und umgekehrt transformieren.

Gemäß einer bevorzugten Ausführung kann vorgesehen sein, dass die Abmessungen und das Gewicht der zusammengeklappten, vorzugsweise mit einem eigenem Fahrgestell ausgestatteten, Wohnbox es ermöglichen, dass die Wohnbox als Anhänger für Fahrräder oder Motorräder verwendbar ist und somit die aufgeklappte Wohnbox als Wohn- bzw. Schlafgelegenheit für ein bis zwei Personen geeignet ist.

Gemäß einer besonders bevorzugten Ausführung kann vorgesehen sein, dass die Abmessungen und das Gewicht der zusammengeklappten Wohnbox es ermöglichen, dass die Wohnbox auf LKW-Ladeflächen oder Tiefladern transportierbar bzw. montierbar ist und die aufgeklappte Wohnbox als eine vorzugsweise mehrgeschossige Wohn- bzw. Schlafgelegenheit verwendbar ist.

Als besonders vorteilhaft hat es sich dabei herausgestellt, wenn die zusammengeklappte Wohnbox im Boden versenkbar ist und die aufgeklappte Wohnbox aus dem Boden ragt, wobei sich die durch das Ausklappen gebildete Öffnung ein Zugang zur Wohnbox ergibt. Durch das Versenken im Erdboden ist die Wohnbox im zusammengeklappten Zustand keinen negativen Umwelteinflüssen ausgesetzt und kann somit auch an äußerst unwirtlichen Gegenden zum Einsatz kommen.

Gemäß einer weiteren Ausführung kann vorgesehen sein, dass die Abmessung und das Gewicht der zusammengeklappten Wohnbox es ermöglichen, dass die Wohnbox mit einem eigenem Tragesystem und/oder Stützsystem ausgestattet ist und von einer Person transportierbar ist, wobei die aufgeklappte Wohnbox als Wohn- bzw. Schlafgelegenheit mit Stauraum und Bett- und Bankkombination für eine Person verwendbar ist und die zusammengeklappte Wohnbox als Rucksack mit Stauraum verwendbar ist.

Gemäß einer bevorzugten Ausführung kann vorgesehen sein, dass die einzelnen Raummodule röhrenförmig ausgebildet sind und luftdichte und/oder wasserdichte Eigenschaften aufweisen, da somit auch ein Transport über und/oder unter Wasser und bestenfalls ein Einsatz als Raumstation im Orbit möglich wird.

Schutz wird weiters begehrt für ein modulares Wohnboxensystem aus klappbaren Wohnboxen, wobei wenigstens zwei Wohnboxen über ein Verbindungselement miteinander verbindbar sind, da somit der Effekt erzielt wird, dass mehrere Wohnboxen miteinander kombiniert werden können. Dies eignet sich speziell für den Katastropheneinsatz als auch für Flüchtlingslager und ähnliches.

Vorzugsweise kann vorgesehen sein, dass bei dem modularen Wohnboxensystem zwei Wohnboxen so miteinander verbunden werden, dass die sich beim Ausklappen der Wohnboxen bildenden, mittleren Öffnungen miteinander verbindbar sind, und es somit gewährleistet ist, dass ein Kontakt zwischen den einzelnen Wohnboxen ermöglicht wird.

Folgend wird die Erfindung anhand mehrerer Ausführungsbeispiele beschrieben, die anhand der Abbildungen näher erläutert werden. Hierbei zeigen:
- Fig.1 a-1 k: Transformation zusammengeklappte Wohnbox in aufgeklappte Wohnbox
- Fig.2a- 2f: Schrittweise Zusammensetzung der aufgeklappten Wohnbox
- Fig.3: Schnitt aufgeklappte Wohnbox auf PKW-Ladefläche von der Seite gesehen
- Fig.4: Grundriss aufgeklappte Wohnbox auf PKW-Ladefläche von oben gesehen
- Fig.5: Schnitt aufgeklappte Wohnbox auf PKW-Ladefläche von hinten gesehen
- Fig.6: Schnitt zusammengeklappte Wohnbox auf PKW-Ladefläche seitlich gesehen
- Fig.7: Schnitt aufgeklappte Wohnbox für 1-2 Personen von der Seite gesehen
- Fig.8: Grundriss aufgeklappte Wohnbox für 1-2 Personen von oben gesehen
- Fig.9: Schnitt aufgeklappte Wohnbox für 1-2 Personen von hinten gesehen
- Fig.10: Schnitt zusammengeklappte Wohnbox für 1-2 Person seitlich gesehen
- Fig.11: Schnitt aufgeklappte Wohnbox im Boden versenkt von der Seite gesehen
- Fig.12: Grundriss aufgeklappte Wohnbox im Boden versenkt mit mobiler Terrasse
- Fig.13: Schnitt aufgeklappte Wohnbox im Boden versenkt von vorne gesehen
- Fig.14: Schnitt zusammengeklappte Wohnbox mit mobiler Terrasse seitlich gesehen
- Fig.15a: Schnitt aufgeklappte Wohnbox bei horizontaler Klappebene
- Fig.15b: Grundriss aufgeklappte Wohnbox bei horizontaler Klappebene von oben gesehen
- Fig.16a: Schnitt aufgeklappte Wohnbox wenn 2 Seitenflächen der zusammengeklappten Wohnbox quadratisch sein sollen, und sich keine mittlere Öffnung bilden soll
- Fig.16b: Grundriss aufgeklappte Wohnbox wenn 2 Seitenflächen der zusammengeklappten Wohnbox quatratisch sein sollen, und sich keine mittlere Öffnung bilden soll
- Fig.17a: Schnitt zusammengeklappte Wohnbox wenn diese röhrenförmig sein soll
- Fig.17b: Schnitt aufgeklappte Wohnbox wenn 2 Seitenflächen der zusammengeklappten Wohnbox rund sein sollen und die zusammengeklappte Wohnbox röhrenförmig sein soll
- Fig.17c: Grundriss aufgeklappte Wohnbox wenn 2 Seitenflächen der zusammengeklappten Wohnbox rund sein sollen und die zusammengeklappte Wohnbox röhrenförmig sein soll
- Fig.18: Schnitt aufgeklappte Wohnbox mit drei Ebenen von der Seite gesehen
- Fig.19: Schnitt aufgeklappte Wohnbox mit drei Ebenen von hinten gesehen
- Fig.20: Mittlere Grundrissebene der aufgeklappten Wohnbox mit drei Ebenen
- Fig.21: Obere Grundrissebene der aufgeklappten Wohnbox mit drei Ebenen
- Fig.22: Untere Grundrissebene der aufgeklappten Wohnbox mit drei Ebenen
- Fig.23: Schnitt zusammengeklappte Transportbox auf LKW-Ladefläche seitlich gesehen
- Fig.24: Grundrisse des Erfindungsgegenstandes aneinander gekoppelt
- Fig.25a: Schnitt einer aufgeklappten tragbaren Wohnbox für eine Person bei Schlaffunktion
- Fig.25b: Diagonalschnitt einer aufgeklappten tragbaren Wohnbox für eine Person bei Schlaffunktion
- Fig.25c: Schnitt einer aufgeklappten tragbaren Wohnbox für eine Person bei Sitzfunktion
- Fig.25d: Schnitt einer zusammengeklappten tragbaren Wohnbox für eine Person
- Fig.26a: Schnitt aufgeklappte Wohnbox mit vier Ebenen von der Seite gesehen
- Fig.26b: Schnitt aufgeklappte Wohnbox mit vier Ebenen von hinten gesehen
- Fig.26c: Oberste Grundrissebene aufgeklappte Wohnbox mit vier Ebenen
- Fig.26d: Grundrissebene + 2 mit Galerie und Luftraum der aufgeklappten Wohnbox mit vier Ebenen
- Fig.26e: Grundrissebene + 1 aufgeklappte Wohnbox mit vier Ebenen
- Fig.26f: Unterste Grundrissebene aufgeklappte Wohnbox mit vier Ebenen
- Fig.26g: Schnitt zusammengeklappte Wohnbox mit vier Ebenen

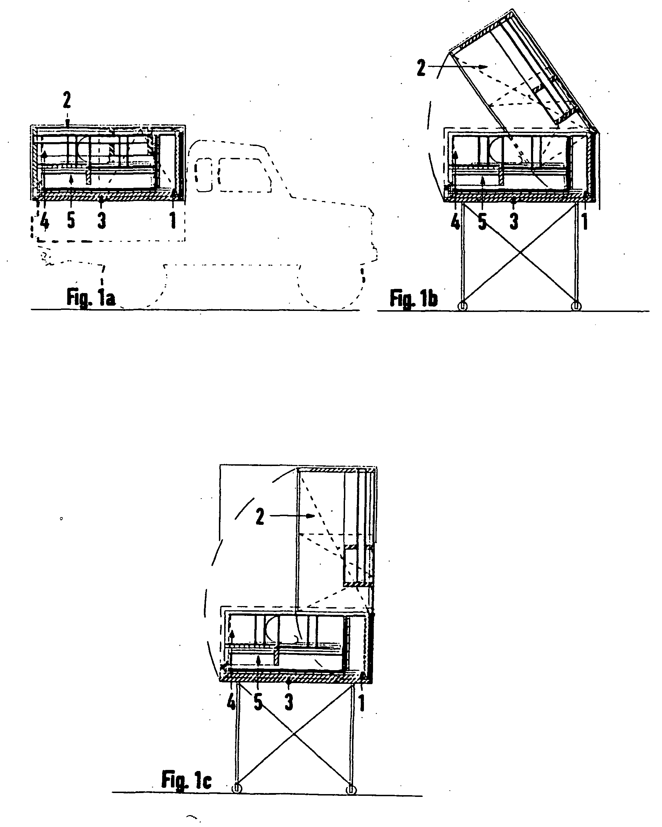

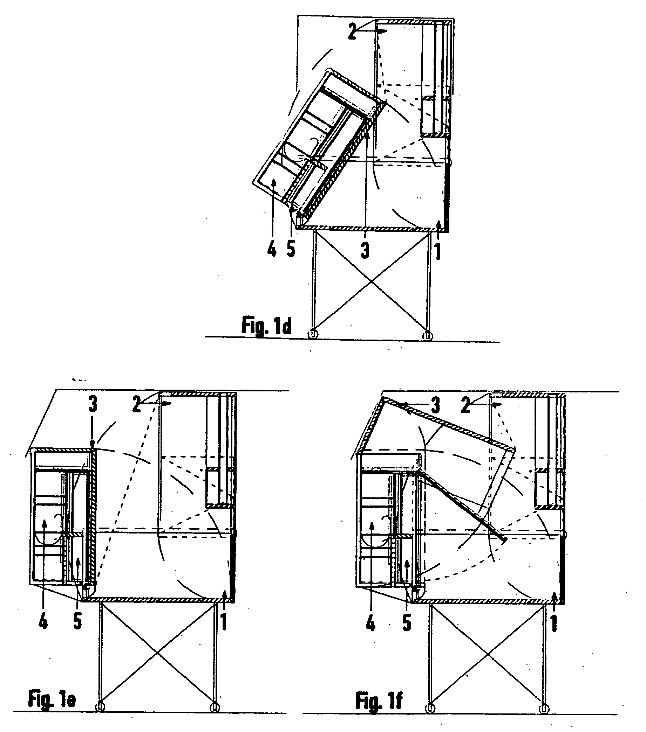

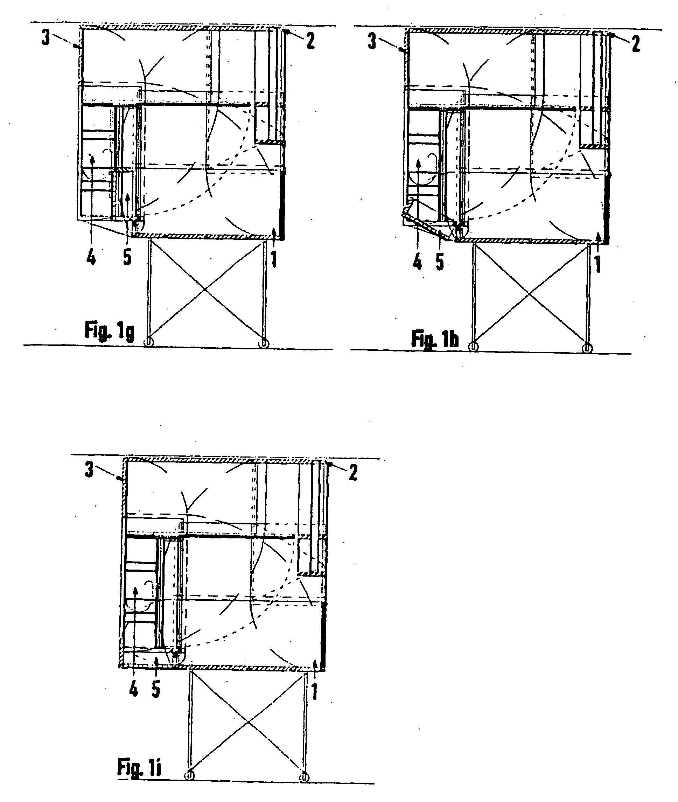

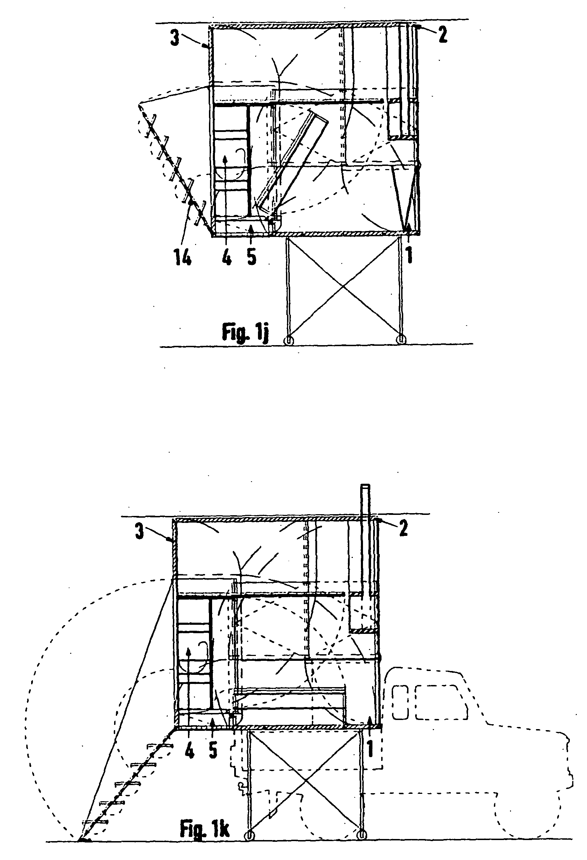

Die Fig. 1a zeigt die zusammengeklappte Wohnbox auf einer Ladefläche eines Fahrzeugs. Dabei sind alle fünf Module mitsamt Inneneinrichtung und Stauraum ineinandergeklappt, was zu einem äußerst geringen Platzbedarf führt. Als Material für die Raummodule sind vorzugsweise Sandwichplatten vorgesehen, denkbar ist natürlich auch jede andere Art von stabilem Material. Zum Aufstellen der Wohnbox: In Fig. 1 b wird als erster Schritt das Raummodul 2, das gelenkig mit dem Raummodul 1 verbunden ist, ausgeklappt. In Fig. 1c wird dieses Raummodul 2 in seiner Position verankert. In Fig. 1d wird das Raummodul 4 ausgeklappt und in Fig. 1e wird das Raummodul 4 in seiner Position fixiert. Zusammen mit dem Raummodul 4 werden gleichzeitig die Raummodule 3 und 5 mitgeklappt, ebenso die Inneneinrichtung, welche sich vornehmlich im Raummodul 4 befindet. Anschließend wird in Fig. 1f gezeigt, wie das Raummodul 3 ausgeklappt und in Fig. 1g in seiner Position fixiert wird, wobei es eine stabile Verbindung mit Raummodul 2 eingeht. In Fig. 1h wird das Raummodul 5 ausgeklappt, in Fig. 1i wird dieses Raummodul 5 in seiner Position fixiert. Anschließend wird für den Zugang, der sich in diesem Fall in Raummodul 4 befindet, eine Treppe 14 ausgeklappt. Eine Klappe im oberen Bereich des Moduls 4 wird ebenso nach oben geklappt, um eine größere Zugangshöhe zu erreichen. Aus Fig. 1j und Fig. 1k geht im Weiteren hervor, wie im Innenraum ein Möbel, wie eine Bank oder ein Bett, ausgeklappt wird. Somit ist die Transformation von der zusammengeklappten Wohnbox zum fertig bewohnbaren Raum vollzogen.

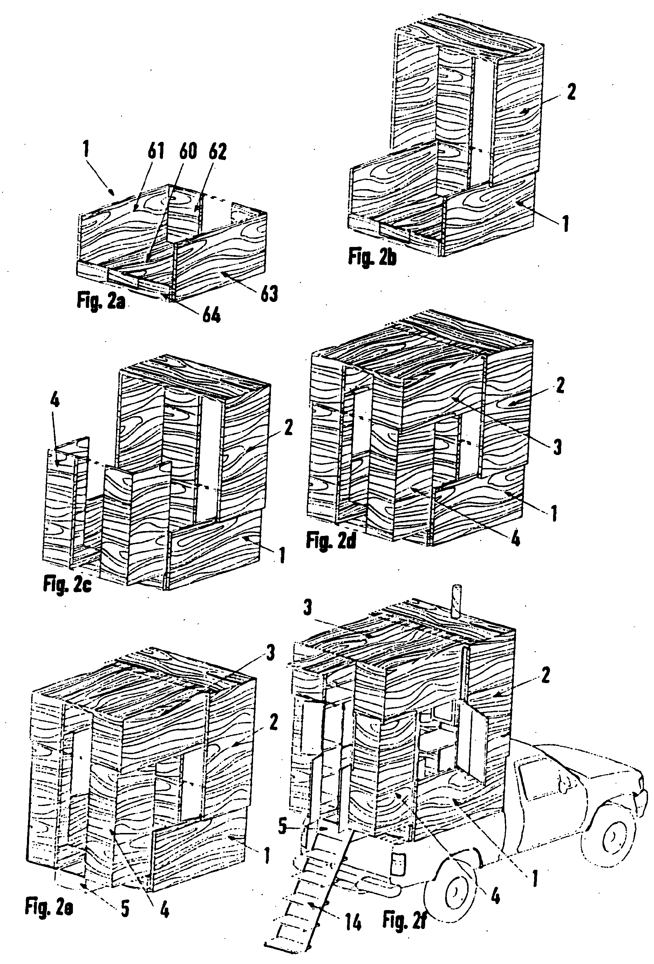

Fig. 2a - 2f zeigt ein Ausführungsbeispiel, bei dem schrittweise die Zusammensetzung einer erfindungsgemäßen Wohnbox dargestellt wird, hierbei wird zur besseren Darstellung nicht das Verschwenken dargestellt sondern einzig und alleine auf die Zusammensetzung eingegangen. In Fig. 2a ist ein Raummodul 1 dargestellt, welches vier Seitenwände 60, 61, 62, 63 aufweist, wobei jede der vier Seitenwände 60, 61, 62, 63 im Wesentlichen einen rechten Winkel zu ihren beiden angrenzenden Seitenwänden bildet. Alle vier, genau genommen fünf Raummodule sind ähnlich aufgebaut und unterscheiden sich hauptsächlich dadurch, dass sie eine unterschiedliche Größe aufweisen. Dadurch kommt der Effekt zustande, dass sie sich ineinander klappen und verschachteln lassen. Die zusätzliche Seitenwand 64 beim Raummodul 1 dient dem Niveauausgleich, da durch das Verschachteln der Raummodule unterschiedliche Höhen der Raummodule erreicht werden. In der Fig. 2b ist das Raummodul 2 dargestellt, welches bewegbar mit dem Raummodul 1 verbunden ist. Das Raummodul 2 weist eine Ausnehmung auf einer der Seitenflächen aus, welche sowohl als Fenster oder auch als ein Platz für eine mögliche Heizquelle darstellt. In Fig. 2c ist das Raummodul 4 dargestellt, welches beweglich verbunden mit dem Raummodul 1 ist. Dieses Raummodul 4 weist ebenfalls eine Ausnehmung auf, welche hier als ein Teil des Zugangs zum Innenraum Verwendung findet. In Fig. 2d ist zusätzlich das Raummodul 3 dargestellt, welches beweglich verbunden mit dem Raummodul 4 ist. Das Raummodul 3 ist hierbei bereits verbunden mit dem Raummodul 2. Bereits dadurch ist ein in sich geschlossener Raum geschaffen. Das Raummodul 3 weist ebenfalls eine Ausnehmung auf eine der Seiten auf, wodurch ein erhöhter Zugang zum Innenraum geschaffen wird. Fig. 2e zeigt nun das fünfte Raummodul 5, welches aus dem Raummodul 4 ausgeklappt wird. Die aufgrund der entsprechend gewählten Dimensionierung der Seitenwände entstandene Öffnung zwischen den Raummodulen 1, 2, 3, 4 wird dabei erfindungsgemäß durch ein ausgeklapptes, vorzugsweise durchsichtiges Klappenelement verschlossen. Vom Raummodul 4 aus wird durch die Öffnung eine begehbare Treppe 14 ausgeklappt. Der Zugang zum Inneren der Wohnbox wird vorteilhafterweise noch mit Klappen verschließbar gemacht. Aus Fig. 2f ist des Weiteren ersichtlich, dass die Wohnbox mobil ausgelegt ist, da sie auf einem Kraftfahrzeug anordenbar ist.

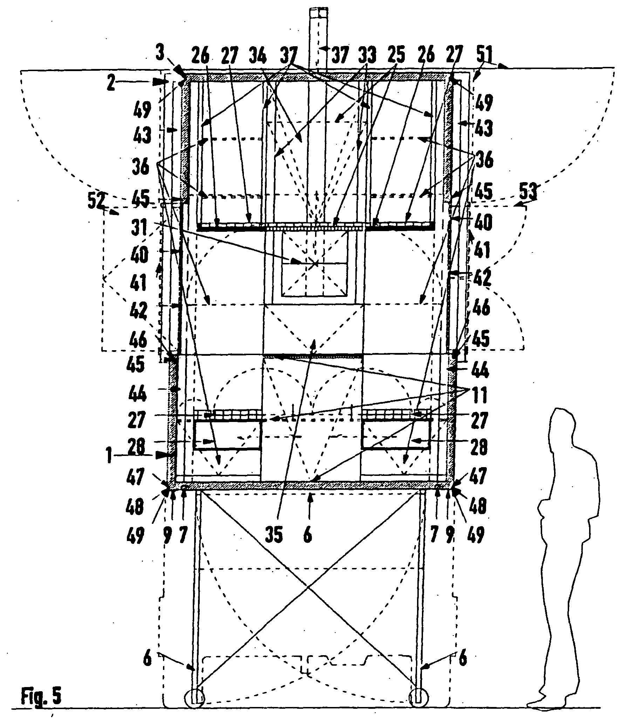

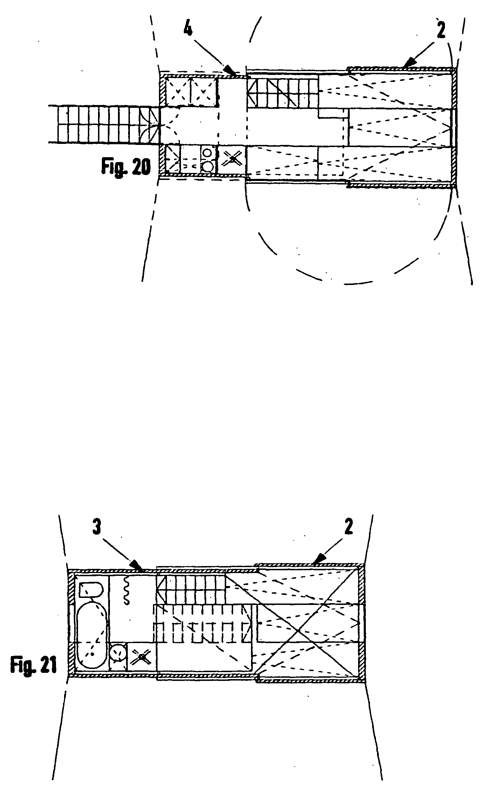

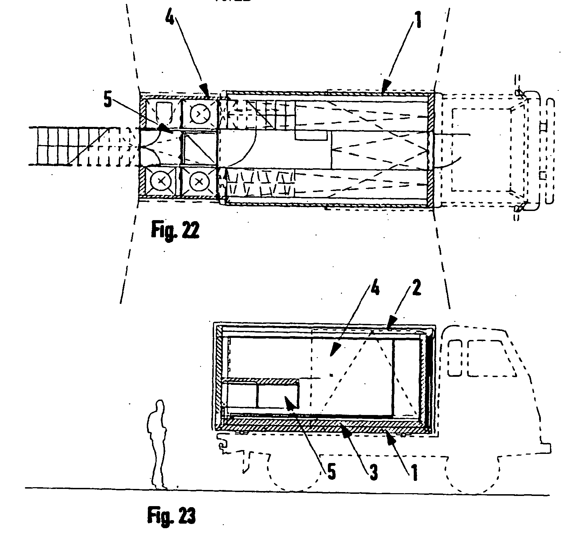

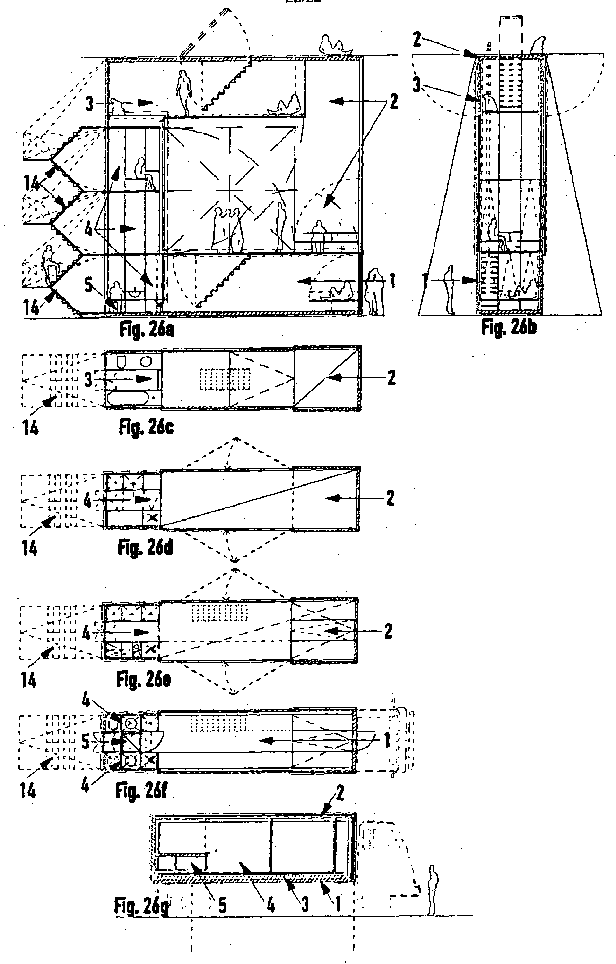

Die Transformation (Fig.1a - Fig.1k) der zugeklappten Wohnbox (Fig.1a, 6, 10, 14, 17a, 23, 25d, 26g) zur aufgeklappten Wohnbox (Fig. 1i, 1j, 1k, 2f, 3, 4, 5, 7, 8, 9, 11, 12, 13, 15a, 15b, 16a, 16b, 17b, 17c, 18, 19, 20, 21, 22, 24, 25a, 25b, 25c) kann z.B. auf PKW- Ladeflächen als Wohnmobilersatz bzw. auf PKW-Anhänger als Wohnwagenersatz stattfinden, ebenso kann die Wohnbox auch als mobiles Klein-, Ferien-, Gartenhaus, Jagdhütte, Biwakschachtel, Notunterkunft bei Katastrophen, Koje auf Boote und Flössen, auch tragbar als Zeltersatz für Zivil- bzw. Militäreinheiten und Camping und ähnlichem zum Einsatz kommen. Vorzugsweise kann die mobile Wohnbox mit eigenem ausklappbaren und höhenverstellbarem Fahrgestell mit Räder und Anhängervorrichtung ausgestattet sein und die zusammengeklappte Wohnbox vorzugsweise wasserdicht und schwimmfähig sein.

Das Raummodul 1, beweglich verbunden mit Raummodul 2 und 4, dient als Basis für die Montage auf Ladeflächen, einem Anhänger oder an eine einklappbare fahr- und höhenverstellbare und aussteifende Auflagerkonstruktion 6. In die Bodenplatte eingelassen sind Rollen 7 und eine ausklappbare Anhängervorrichtung 8 zum Rangieren, Ösen 9 für die Sicherung beim Transport und für die Anbringung von Zeltplanen, welche für die Raumabschirmung unterhalb der Wohnbox dienen. In die frontale Fensternische unter dem aufgeklappten, mit einem vorzugsweise abdichtenden Scharnier 10 verbundenen Raummodul 2 findet der Klapptisch bzw. Bettmittelteil 11 seinen Platz, bei der Umwandlung zur zusammengeklappten Wohnbox (Fig.1a, 6, 10, 14, 17a, 23, 25d, 26g) werden weiters die miteinander beweglich verbundenen Module 3, 4, 5 in das Raummodul 1 hineingeklappt und anschließend mit Raummodul 2 vorzugsweise wasserdicht verschlossen.

Das Raummodul 5, mittels Drehgelenk 12 verbunden mit Raummodul 4 und der einziehbaren Klapptreppe 14, hat im Boden vorzugsweise eine eingebaute Duschwanne 13 mit Abfluss, weiters ist diese Bodenfläche Bewegungsraum für Kochen 15, Toilettenauszug 16, Waschen 17, Duschen 18, Kühlschrank 19, Stauräume 20 und Aufgang bzw. Leiter zum Hochbett 21 und wird beim Transport mitsamt Klapp-, Zugtreppe in den Freiraum von Raummodul 4 geklappt. Ebenso ist es denkbar, dass das kleine Raummodul 5 wegfällt und der Boden von Raummodul 4 durchgehend ist und die Funktionen von Raummodul 5 (im Boden eingebaute Duschwanne 13 mit Abfluss, Bewegungsraum für Kochen 15, Toilettenauszug 16, Waschen 17, Duschen 18, Kühlschrank 19, Stauräume 20 und Aufgang bzw. Leiter zum Hochbett 21) übernimmt und es somit eine Stufe in das Raummodul 1 gibt.

Das Raummodul 4 ist dicht bestückt mit Einbaumöbeln, wie Kocher 15, Auszug für Camping-Toilette 16, Waschbecken mit Klappdeckel und Armatur 17, mit Duschschlauch für Dusche 18. Dieser Dusch- bzw. Toilettenraum kann dreiseitig mit Rollladen 22 abgetrennt werden. Weiters bestückt mit Wasserboiler 23, Kühlschrank 19, Stauräume 20 für Küche und Sonstiges, Aufgang bzw. Leiter 21 zum Hochbett, horizontalen Abschluss bzw. zweiteilige ebene Schiebetür 24 für Hochbett, zusammengeklappt den Faltschiebeteil für Mittelteil 25 und die seitlichen Lattenroste 26, mit Matratzen 27 für das Hochbett, aufgeklappt die Bank-, bzw. Bett-, Stauraumkombination 28 mit Auszügen, Matratzen 27 und Stützfuß, Klappregale 29 und die horizontal und vertikal zweigeteilten Pendeltüren 30 als Eingangstür, welche in der zusammengeklappten Wohnbox (Fig.1a, 6, 10, 14, 17a, 23, 25d, 26g) offen stehen bleibt, damit die Ofen, Grill-, ev. Kühl- Kombination 31 des Raummoduls 2 im freibleibenden Zwischenraum von Raummodul 4 Platz findet.

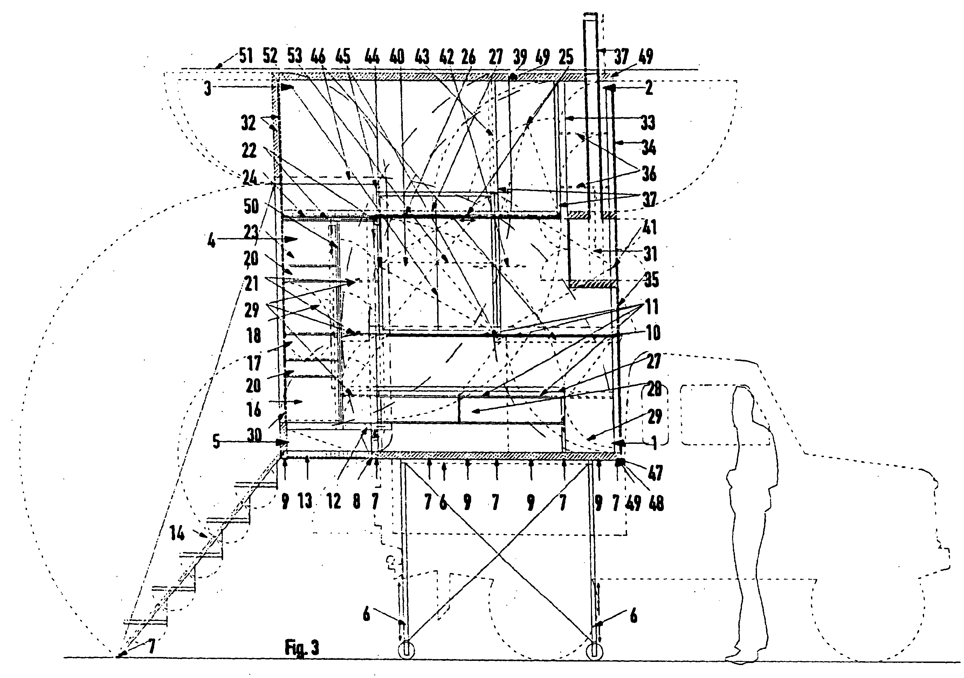

Raummodul 3, aufgeklappt getragen und mittels vorzugsweise dichtenden Bandscharnieren 10 beweglich verbunden mit Raummodul 4, stülpt sich beim Zusammenklappen über Raummodul 4 und gleichzeitig werden die Lattenroste 25, 26 und Matratzen 27 des Hochbettes, beweglich verbunden über eine Seilabhängung 37, im Zwischenraum geparkt (Fig. 3). Die zweigeteilten Klappen 32 über der Eingangstür 30 dienen vorzugsweise einerseits als gläserne Lüftungsklappe und andererseits als Vordach für Eingang und Klapp-, Zugtreppe 14.

Raummodul 2 mit Ofen-, Grill-, ev. Kühl-Kombination 31, welche von innen als auch von außen bedienbar ist, kann entlang der Abhängung und Führung 33 verschoben werden und kann somit bei offenen Glasklappen 34, 35 vom Hochbett aus bedient werden. Seitlich der Fenster 34, 35 werden Klappregale 36 aus der Wand geklappt, welche zusammen mit der Abhängung 37 für das Hochbett, herausgeklappt aus der Matratzenebene des Hochbetts, die Aussteifung und Ruhigstellung des Hochbetts gewährleistet. Das Kaminrohr 38, welches vorzugsweise drehbar ausgeführt auch als Windgenerator dient, wird beim Transport in den Hohlraum der Ofen-, Grill, ev. Kühlkombination verschoben. Zwischen Raummodul 3 und dem Raummodul 2 wird eine dichte, feste und überlappende Verbindung mit Spannbeschlägen 39 hergestellt.

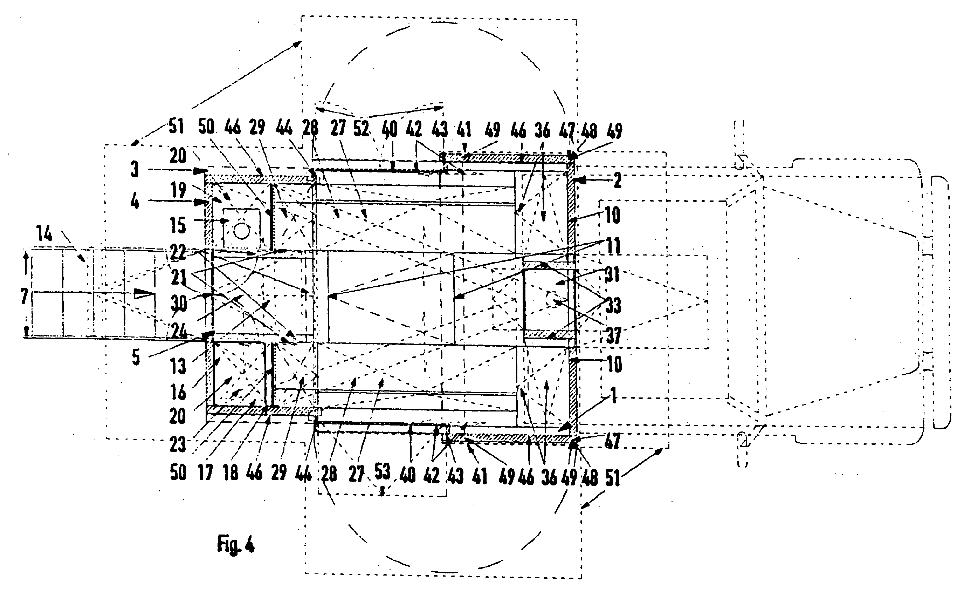

Die aufgeklappten Raummodule bilden zwei seitliche Fensteröffnungen 40, welche durch Glasklappen mit Deckel 41, 42 beweglich verbunden durch Scharnierbänder mit dem Raummodul 2, geschlossen werden. Die Deckel 41, 42, dienen sowohl außen als Schutz 41 für das Glas bei der Wohnbox (Fig. 4), als auch innen als Schiebeladen 42 bei der Wohnbox. Die sich bildenden Lücken zwischen Raummodul 2 und 3 und zwischen Raummodul 1 und 4 werden vorzugsweise durch Glasklappen 43, 44, beweglich verbunden durch Scharnierbänder mit den angrenzenden Wandelementen herausgeklappt, geschlossen.

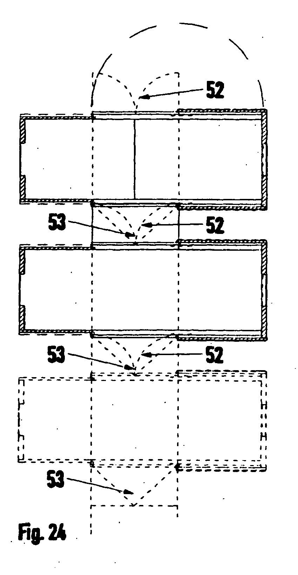

In Fig. 24 wird die Möglichkeit der Koppelung mehrerer Wohnboxen durch die vertikalen Klappen 52 und horizontalen Klappen 53 dargestellt.

Verschlusszapfen 45 an den sich überlappenden Raummodulecken sperren und stabilisieren die aufgeklappte Wohnbox. Die sich teilweise überlappenden Wandelemente der einzelnen Raummodule werden vorzugsweise durch Gummi-, Kältefeind-, Bürstendichtungen 46 wärme-, schalltechnisch und wasserdicht abgedichtet. Das automatisierte Auf-, und Zuklappen der Raummodule wird vorzugsweise entweder durch eine in den Wänden integrierte Hydraulikanlage 47, oder mittels einfachen mechanischen Seil-, bzw. Kettenzügen 48 und Umlenkrollen 49 bewerkstelligt.

Die Wände der Raummodule bestehen vorzugsweise aus starren Sandwichleichtbauelementen, welche innen vorzugsweise mit integrierten Klappelementen 50 wie Klapp, -regale, -haken, -ösen, -spiegel, Klapplampen und versenkten Elektro-, und Sanitäranschlüsse ausgestattet sind.

Eine Abdeckplane 51 mit vorzugsweise flexibler und strapazfähiger Photovoltaikoberfläche und mit steifem eingearbeiteten Randprofil soll den Innenraum während dem Auf- bzw. Abbau vor Niederschlag schützen und kann die aufgeklappte Wohnbox zusätzlich als hinterlüftete Dachhaut, als Sonnensegel oder als Wasserauffangbecken vor Witterung und Überhitzung schützen und dient gleichzeitig der Wasser- und Elektrizitätsversorgung.

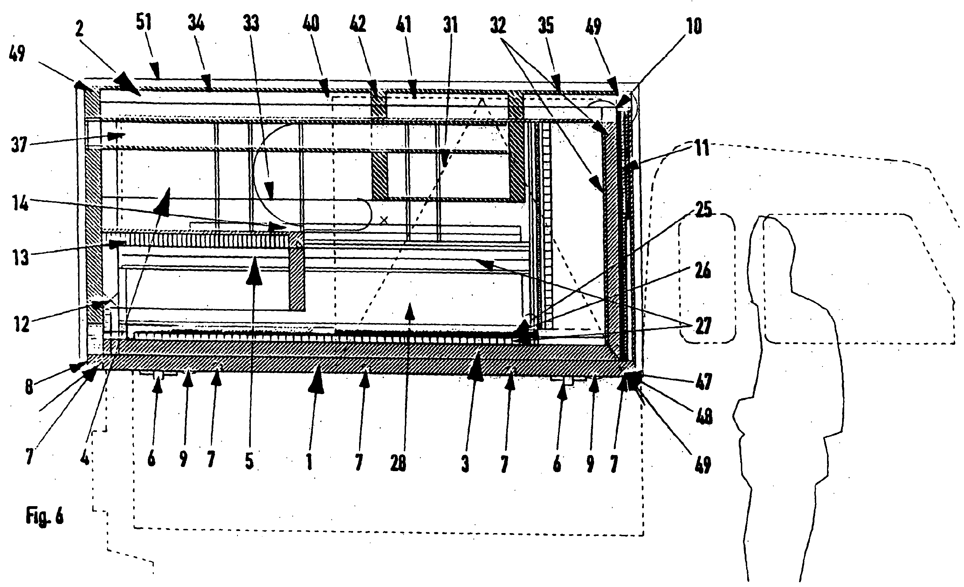

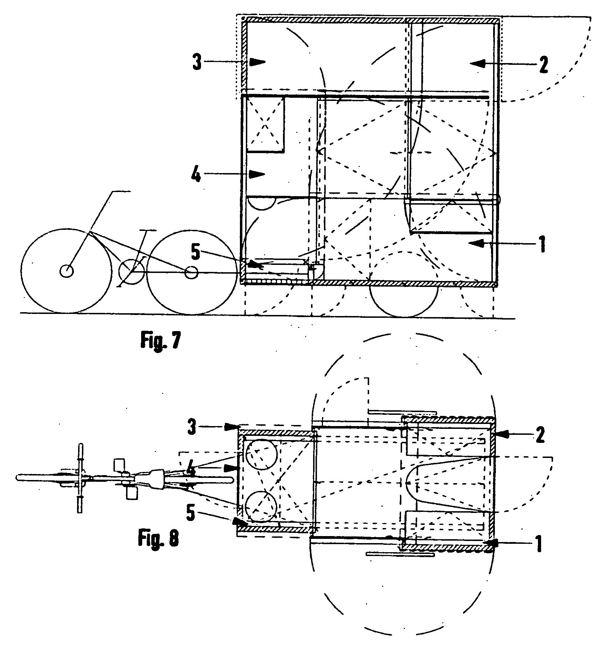

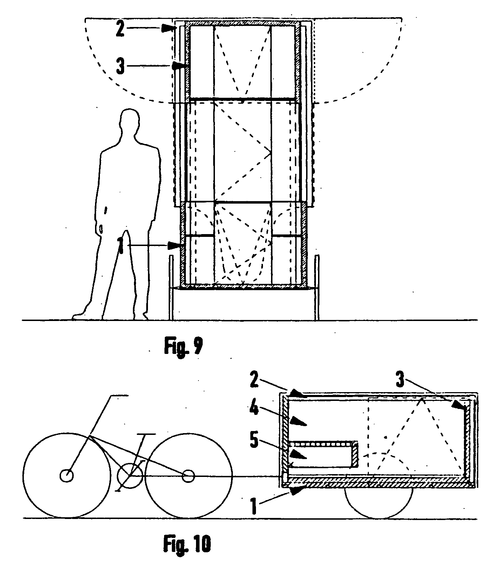

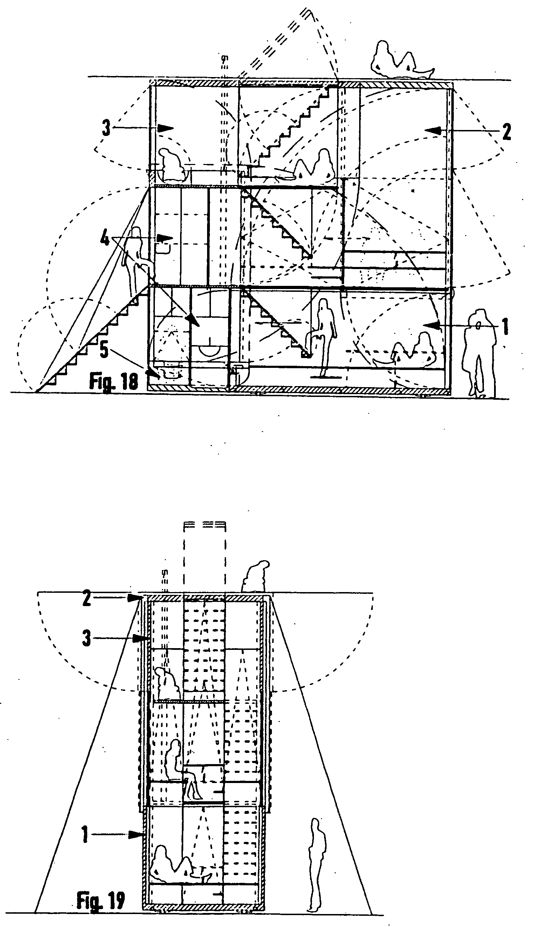

Bei entsprechenden Abmessungen der zusammengeklappten Wohnbox (Fig. 10), vorzugsweise ausgestattet mit eigenem Fahrgestell, eignet sich die Wohnbox als Anhänger für Fahrräder oder Motorräder und aufgeklappt als Wohn-, bzw. Schlafbox für ein bis zwei Personen (Fig. 7 - Fig. 9). Bei größeren Abmessungen der zusammengeklappten Wohnbox (Fig.6), transportierbar auf LKW-Ladefläche oder Tieflader, entsteht bei der ausgeklappten Wohnbox vorzugsweise ein mehrgeschossiges Bauwerk für Wohnen (Fig.18 - Fig.23), Arbeiten, Ausstellungen, Messen oder als Bühne für Veranstaltungen etc., wobei mehrere dieser Bauwerke (Fig. 24) vorzugsweise miteinander über die sich bildenden mittlere Öffnungen 40 und den horizontalen Klappen 53 und den vertikalen Klappen 52 gekoppelt werden können.

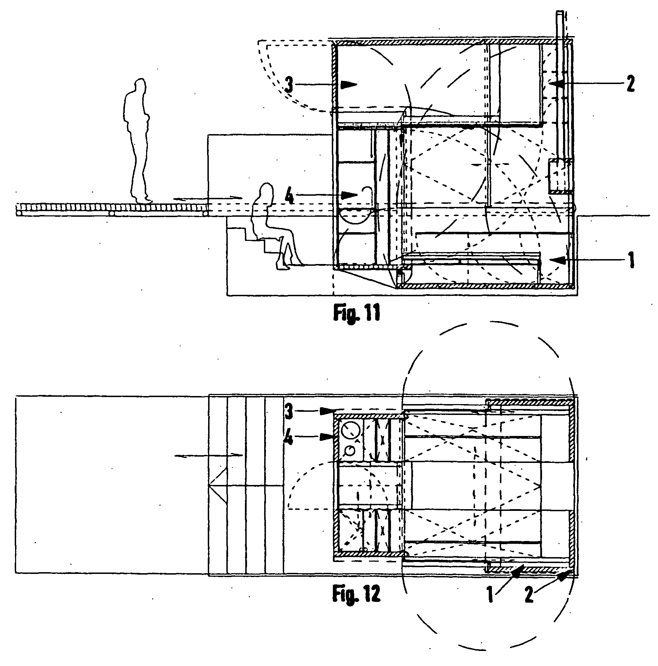

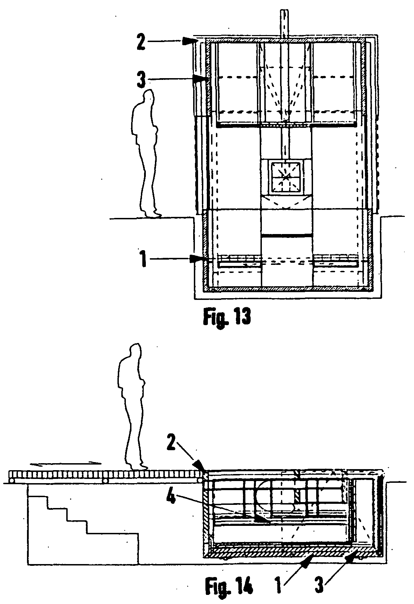

Die zusammengeklappte Wohnbox (Fig. 14) kann unsichtbar im Boden versenkt sein wobei die aufgeklappte Wohnbox (Fig. 11) dann vorzugsweise etwa 2/3 aus dem Boden ragt und die sich bildende Öffnung 40 in der Mitte ebenerdig ist.

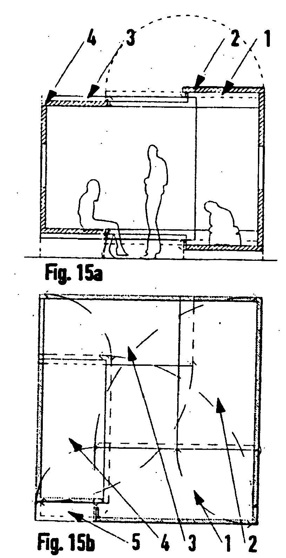

Bei beschränkter Möglichkeit für Höhenentwicklung oder bei größerem Flächenbedarf wird das bisher beschriebene Prinzip der vertikalen Klappebene der Module gekippt und in eine horizontale Klappebene (Fig. 15a, Fig. 15b) gedreht, wobei die sich bildenden Öffnungen 40 in der Mitte somit auf Fußboden bzw. Deckenebene zu liegen kommen und so sich im Zentrum eine Art Lichthof bzw. Atrium bildet.

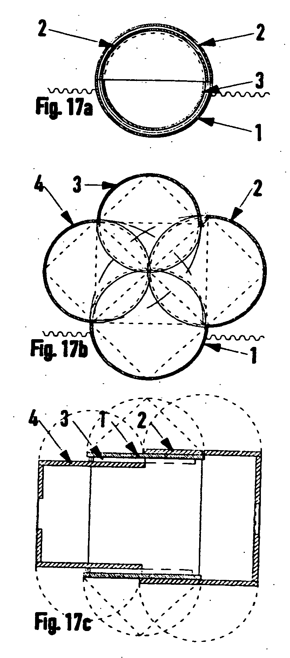

Die zusammengeklappte Wohnbox kann auch röhrenförmig (Figur 17a) sein, wobei die (Seiten-)Teile der miteinander beweglich verbundenen Raummodule (1, 2, 3, 4) vorzugsweise kreisförmig und die Innenflächen gewölbt sein können (Figur 17b, 17c) und vorzugsweise mit Dichtungen luft- und wasserdicht, bestenfalls weltraumtauglich, verschlossen sind.

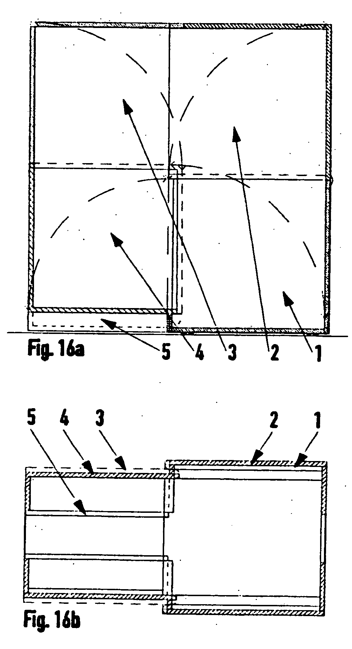

Die zwei Seitenflächen der zusammengeklappten Wohnbox und der einzelnen Raummodule können auch quadratisch sein (Figur 16a, 16b), wobei es keine sich bildende Öffnung in der Mitte gibt und der Raumgewinn der aufgeschlossenen Wohnbox gegenüber der zusammengeklappten Wohnbox geringer ist.

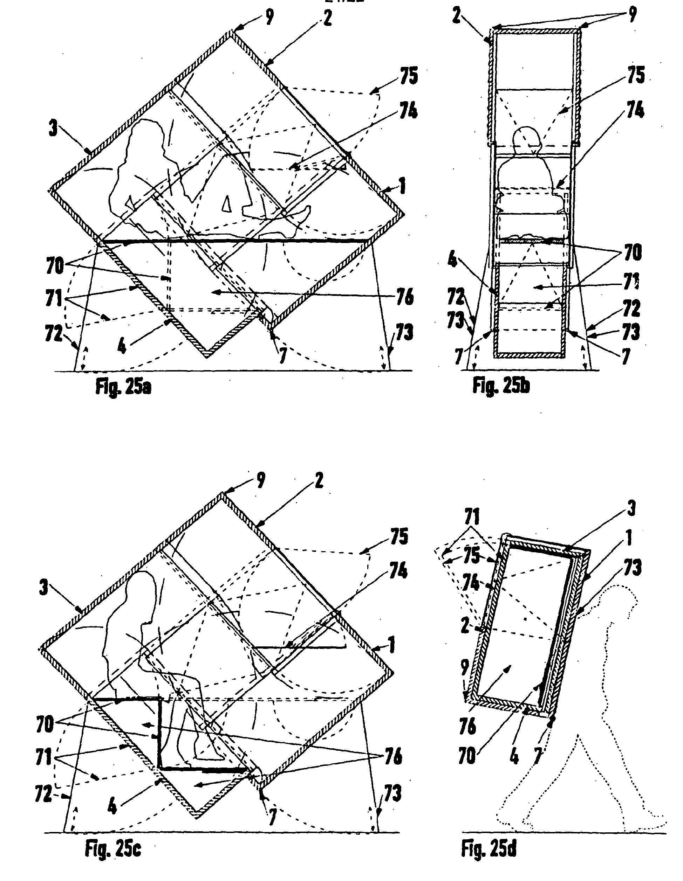

Bei entsprechenden kleinen Abmessungen der zusammengeklappten Wohnbox (Fig. 25d), vorzugsweise ausgestattet mit eigenem Trage- und Stützsystem (72, 73), eignet sich die Wohnbox als eine von einer Person tragbaren Behausung (Fig. 25a, 25b, 25c) mit Stauraum 76, Bett- und Bankkombination 70 und Klapptisch 74. Durch das Stützsystem (72, 73) welches teleskopartig ausgebildet ist, eignet sich die Wohnbox auch zur Aufstellung in unebenem Gelände. Durch die Klappe 71 erschließt sich auch der Stauraum 76 bei zusammengeklappter Wohnbox. Mittels der Rollen 7 lässt sich die Wohnbox ziehen. Mittels der Ösen 9 lässt sich die Wohnbox aufhängen, was sowohl zum Verstauen der Wohnbox dienlich ist als auch die Wohnbox zur Verwendung als Schlafgelegenheit etc. aufgehängt werden kann. Dies ist zum Beispiel für die Verwendung als Biwak - in einer Wand und ohne Bodenkontakt - von Vorteil.

Wenn auch die Erfindung anhand der gezeigten Ausführungsbeispiele konkret beschrieben wurde, versteht es sich von selbst, dass der Anmeldungsgegenstand nicht auf diese Ausführungsbeispiele beschränkt ist. Vielmehr sind Maßnahmen und Abwandlungen, die dazu dienen, den Erfindungsgedanken umzusetzen, durchaus denkbar und erwünscht.

### Bezugszeichenliste:

- 1: erstes Raummodul
- 2: zweites Raummodul
- 3: viertes Raummodul
- 4: drittes Raummodul
- 5: fünftes Raummodul
- 6: Auflagerkonstruktion
- 7: Rollen
- 8: Anhängervorrichtung
- 9: Ösen
- 10: Scharnier
- 11: Klapptisch bzw. Bettmittelteil
- 12: Drehgelenk
- 13: Duschwanne
- 14: Klapptreppe
- 15: Bodenfläche Bewegungsraum
- 16: Toilettenauszug
- 17: Waschen
- 18: Duschen
- 19: Kühlschrank
- 20: Stauräume
- 21: Aufgang bzw. Leiter zu Hochbett
- 22: Rollladen
- 23: Wasserboiler
- 24: horizontaler bzw. zweiteilige ebene Schiebetür
- 25: Faltschiebeteil für Mittelteil Hochbett
- 26: seitliche Lattenroste für Hochbett
- 27: Matratzen
- 28: Bank-, bzw. Bett-, Stauraumkombination mit Auszügen und Stützfuß
- 29: Klappregale
- 30: horizontal und vertikal zweigeteilte Pendeltür
- 31: Ofen-, Grill-, Kühl-Kombination
- 32: Zweiteilige Klappen als gläserne Lüftungsklappe und klappbares Vordach
- 33: Abhängung und Führung für 31
- 34: Glasklappen
- 35: Glasklappen
- 36: Klappregale aus der Wand
- 37: Abhängung für das Hochbett
- 38: Kaminrohr
- 39: dichte, feste und überlappende Verbindung
- 40: sich bildende seitliche Fensteröffnungen
- 41: Deckel, außen Schutz für Glasklappen
- 42: innen Schiebeladen für Glasklappen
- 43: Glasklappen für Fensteröffnung
- 44: Glasklappen für Fensteröffnung
- 45: Verriegelung und Stabilisierung
- 46: Dichtungen
- 47: Hydraulikanlage
- 48: mechanische Seil-, bzw. Kettenzüge
- 49: Umlenkrollen
- 50: in Wand integrierte Klappelemente
- 51: Abdeckplane
- 52: vertikale Klappen für Koppelung
- 53: horizontale Klappen für Koppelung
- 60: Seitenfläche für Raummodul
- 61: Seitenfläche für Raummodul
- 62: Seitenfläche für Raummodul
- 63: Seitenfläche für Raummodul
- 64: Seitenfläche für Raummodul
- 70: Bett und Bankkombination
- 71: Stauraum Klappe
- 72: Ständer höhenverstellbar
- 73: Ständer höhenverstellbar und Tragegestell
- 74: Klapptisch schwenkbar
- 75: Fenster und Öffnung Stauraum Rucksack
- 76: Stauraum

## Patentansprüche

1. Klappbare Wohnbox, die relativ zueinander schwenkbare Teile aufweist, wobei durch das Verschwenken der Teile ein nutzbarer, insbesondere bewohnbarer, Innenraum entsteht, wobei die schwenkbaren Teile als Raummodule (1, 2, 3, 4, 5) unterschiedlicher Größe ausgebildet sind und wobei die Raummodule (1, 2, 3, 4, 5) relativ zueinander und ineinander über Schwenkachsen schwenkbar, insbesondere verschachtelbar, sind, wobei die Schwenkachsen im Wesentlichen parallel zueinander ausgebildet sind. **dadurch gekennzeichnet, dass** die Wohnbox wenigstens vier Raummodule enthält, welche jeweils wenigstens drei starre und relativ zueinander feststehende oder feststellbare Seitenwände (60, 61, 62, 63) aufweisen

2. Klappbare Wohnbox nach Anspruch 1, **dadurch gekennzeichnet, dass** die Verschwenkung der Raummodule (1, 2, 3, 4, 5) zwischen einer Schließstellung und einer Offenstellung um die Schwenkachsen um im Wesentlichen 90 Grad erfolgt.

3. Klappbare Wohnbox nach Anspruch 1 oder 2, **dadurch gekennzeichnet, dass** die Summe der Rauminhalte der einzelnen Raummodule (1, 2, 3, 4, 5) kleiner ist als der gesamte Rauminhalt der ausgeklappten Wohnbox.

4. Klappbare Wohnbox nach einem der Ansprüche 1 bis 3, **dadurch gekennzeichnet, dass** an einem Raummodul (1) der wenigstens vier Raumodule (1, 2, 3, 4, 5) an gegenüberliegenden Seiten jeweils ein zweites Raummodul (2) und ein drittes Raummodul (4) schwenkbar gelagert ist und das vierte Raummodul (3) schwenkbar am zweiten Raummodul (2) oder dritten Raummodul (4) gelagert ist.

5. Klappbare Wohnbox nach einem der Ansprüche 1 bis 4, **dadurch gekennzeichnet, dass** das Ausklappen, Verriegeln und Einklappen der Raummodule (1, 2, 3, 4, 5) werkzeuglos von Hand durchführbar ist.

6. Klappbare Wohnbox nach einem der Ansprüche 1 bis 5, **dadurch gekennzeichnet, dass** wenigstens eines der Raummodule (1, 2, 3, 4, 5) und / oder die aufgeklappte Wohnbox eine Öffnung aufweisen.

7. Klappbare Wohnbox nach Anspruch 6, **dadurch gekennzeichnet, dass** die Öffnung als Fenster oder, vorzugsweise mit einer Tür versehener, Zugang ausgebildet ist.

8. Klappbare Wohnbox nach einem der Ansprüche 1 bis 7, **dadurch gekennzeichnet, dass** die Wände der Raummodule aus Sandwichleichtbauelementen bestehen, welche innen mit integrierten Klappelementen (50) ausgestattet sind.

9. Klappbare Wohnbox nach einem der Ansprüche 1 bis 8, **dadurch gekennzeichnet, dass** die Abmessungen und das Gewicht der zusammengeklappten, vorzugsweise mit einem eigenem Fahrgestell ausgestatteten, Wohnbox es ermöglichen, dass die Wohnbox als Anhänger für Fahrräder oder Motorräder verwendbar ist und die aufgeklappte Wohnbox als Wohn- bzw. Schlafgelegenheit, vorzugsweise für ein bis zwei Personen, verwendbar ist.

10. Klappbare Wohnbox nach einem der Ansprüche 1 bis 9, **dadurch gekennzeichnet, dass** die zusammengeklappte Wohnbox im Boden versenkt ist und die aufgeklappte Wohnbox, vorzugsweise im Wesentlichen 2/3, aus dem Boden ragt, wobei die sich durch das Ausklappen gebildete Öffnung einen, vorzugsweise ebenerdigen, Zugang zur Box bildet.

11. Klappbare Wohnbox nach einem der Ansprüche 1 bis 10, **dadurch gekennzeichnet, dass** die einzelnen Raummodule (1, 2, 3, 4) im Wesentlichen röhrenförmig ausgebildet sind und luftdichte und / oder wasserdichte Eigenschaften aufweisen.

12. Modulares Wohnboxensystem aus klappbaren Wohnboxen nach einem der Ansprüche 1 bis 11, **dadurch gekennzeichnet, dass** wenigstens zwei Wohnboxen über ein Verbindungselement (52, 53) miteinander verbindbar sind.

13. Modulares Wohnboxensystem nach Anspruch 12, **dadurch gekennzeichnet, dass** wenigstens zwei Wohnboxen über die mit sich beim Ausklappen der Wohnboxen bildenden, mittleren Öffnungen (40) und / oder Verbindungselementen (52, 53) miteinander verbindbar sind.

14. Verwendung einer klappbaren Wohnbox nach einem der Ansprüche 1 bis 11 als Behausung.

## Claims

1. A foldable living box which has portions which are pivotable relative to each other, wherein a usable, in particular habitable, interior is produced by the pivotal movement of the portions, wherein the pivotable portions are in the form of room modules (1, 2, 3, 4, 5) of differing size, and wherein the room modules (1, 2, 3, 4, 5) are pivotable, in particular nestable, relative to each other and into each other by way of pivot axes, wherein the pivot axes are substantially parallel to each other, **characterised in that** the living box includes at least four room modules which respectively have at least three rigid side walls (60, 61, 62, 63) which are fixed or which can be locked relative to each other.

2. A foldable living box according to claim 1 **characterised in that** the pivotal movement of the room modules (1, 2, 3, 4, 5) between a closed position and an open position about the pivot axes takes place through substantially 90 degrees.

3. A foldable living box according to claim 1 or claim 2 **characterised in that** the total of the volumes of the individual room modules (1, 2, 3, 4, 5) is less than the total volume of the unfolded living box.

4. A foldable living box according to one of claims 1 to 3 **characterised in that** a second room module (2) and a third room module (4) is respectively pivotably mounted to a room module (1) of the at least four room modules (1, 2, 3, 4, 5) at mutually opposite sides and the fourth room module (3) is mounted pivotably to the second room module (2) or the third room module (4).

5. A foldable living box according to one of claims 1 to 4 **characterised in that** unfolding, locking and folding in of the room modules (1, 2, 3, 4, 5) can be performed by hand without a tool.

6. A foldable living box according to one of claims 1 to 5 **characterised in that** at least one of the room modules (1, 2, 3, 4, 5) and/or the unfolded living box has an opening.

7. A foldable living box according to claim 6 **characterised in that** the opening is in the form of a window or an access preferably provided with a door.

8. A foldable living box according to one of claims 1 to 7 **characterised in that** the walls of the room modules comprise lightweight sandwich elements which are internally equipped with integrated folding elements (50).

9. A foldable living box according to one of claims 1 to 8 **characterised in that** the dimensions and the weight of the living box when folder together and which is preferably provided with its own chassis make it possible that the living box can be used as a trailer for bicycles or motor cycles and the unfolded living box can be used as a living or sleeping accommodation, preferably for one to two persons.

10. A foldable living box according to one of claims 1 to 9 **characterised in that** the living box when folded together is sunk in the ground and the unfolded living box projects out of the ground by substantially 2/3 wherein the opening formed by unfolding the box forms an access to the box, that is preferably at ground level.

11. A foldable living box according to one of claims 1 to 10 **characterised in that** the individual room modules (1, 2, 3, 4) are of a substantially tubular configuration and have air-tight and/or water-tight properties.

12. A modular living box system comprising foldable living boxes according to one of claims 1 to 11 **characterised in that** at least two living boxes can be connected together by way of a connecting element (52, 53).

13. A modular living box system according to claim 12 **characterised in that** at least two living boxes can be connected together by way of connecting elements (52, 53) and/or the central openings (40) which are formed when the living boxes are unfolded.

14. Use of a foldable living box according to one of claims 1 to 11 as housing.

## Revendications

1. Caisse d'habitation pliante, qui présente des parties pivotant les unes par rapport aux autres, le pivotement des parties créant un espace intérieur utile, en particulier habitable, les parties pivotantes étant constituées en tant que modules d'espace (1, 2, 3, 4, 5) de différentes tailles, et les modules d'espace (1, 2, 3, 4, 5) pouvant pivoter les uns par rapport aux autres et les uns dans les autres par le biais d'axes de pivotement et pouvant en particulier être emboîtés les uns dans les autres, les axes de pivotement étant constitués de façon essentiellement parallèles entre eux, **caractérisée en ce que** la caisse d'habitation contient au moins quatre modules d'espace, lesquels présentent respectivement au moins trois parois latérales (60, 61, 62, 63) rigides et fixes ou pouvant être immobilisées les unes par rapport aux autres.

2. Caisse d'habitation pliante selon la revendication 1, **caractérisée en ce que** le pivotement des modules d'espace (1, 2, 3, 4, 5) entre une position de fermeture et une position ouverte autour des axes de pivotement s'effectue essentiellement sur 90 degrés.

3. Caisse d'habitation pliante selon la revendication 1 ou 2, **caractérisée en ce que** la somme des volumes des modules d'espace (1, 2, 3, 4, 5) individuels est inférieure au volume total de la caisse d'habitation déployée.

4. Caisse d'habitation pliante selon l'une des revendications 1 à 3, **caractérisée en ce que**, sur un module d'espace (1) des au moins quatre modules d'espace (1, 2, 3, 4, 5), sur des côtés opposés, respectivement un deuxième module d'espace (2) et un troisième module d'espace (4) sont supportés de façon pivotante, et le quatrième module d'espace (3) est supporté de façon pivotante sur le deuxième module d'espace (2) ou sur le troisième module d'espace (4).

5. Caisse d'habitation pliante selon l'une des revendications 1 à 4, **caractérisée en ce que** le déploiement, le verrouillage et le pliage des modules d'espace (1, 2, 3, 4, 5) peuvent être réalisés à la main sans outils.

6. Caisse d'habitation pliante selon l'une des revendications 1 à 5, **caractérisée en ce qu'**au moins un des modules d'espace (1, 2, 3, 4, 5) et/ou la caisse d'habitation dépliée présentent une ouverture.

7. Caisse d'habitation pliante selon la revendication 6, **caractérisée en ce que** l'ouverture est constituée en tant que fenêtre ou en tant qu'accès, de préférence muni d'une porte.

8. Caisse d'habitation pliante selon l'une des revendications 1 à 7, **caractérisée en ce que** les parois des modules d'espace se composent d'éléments sandwich pour construction légère, lesquels sont équipés intérieurement d'éléments pliants (50) intégrés.

9. Caisse d'habitation pliante selon l'une des revendications 1 à 8, **caractérisée en ce que** les dimensions et le poids de la caisse d'habitation repliée, de préférence équipée d'un propre châssis, permettent que la caisse d'habitation puisse être utilisée en tant que remorque pour des vélos ou des motos et que la caisse d'habitation dépliée puisse être utilisée en tant que logement ou couchage, de préférence pour une à deux personnes.

10. Caisse d'habitation pliante selon l'une des revendications 1 à 9, **caractérisée en ce que** la caisse d'habitation repliée est enfoncée dans le sol et la caisse d'habitation dépliée dépasse du sol, de préférence essentiellement aux 2/3, l'ouverture formée par le déploiement formant un accès à la caisse, de préférence au niveau du sol.

11. Caisse d'habitation pliante selon l'une des revendications 1 à 10, **caractérisée en ce que** les modules d'espace (1, 2, 3, 4) individuels sont essentiellement constitués sous forme tubulaire et présentent des propriétés étanches à l'air et/ou étanches à l'eau.

12. Système modulaire de caisses d'habitation composé de caisses d'habitation pliantes selon l'une des revendications 1 à 11, **caractérisé en ce qu'**au moins deux caisses d'habitation peuvent être raccordées l'une à l'autre par le biais d'un élément de raccordement (52, 53).

13. Système modulaire de caisses d'habitation selon la revendication 12, **caractérisé en ce qu'**au moins deux caisses d'habitation peuvent être raccordées l'une à l'autre par le biais des ouvertures (40) centrales se formant lors du déploiement des caisses d'habitation et/ou d'éléments de raccordement (52, 53).

14. Utilisation d'une caisse d'habitation pliante selon l'une des revendications 1 à 11 en tant que lieu d'habitation.
